# EUROPEAN PATENT SPECIFICATION

(11) **EP 4 284 082 B1**
(45) Date of publication and mention of the grant of the patent: **19.11.2025**
(21) Application number: 22742904.0
(22) Date of filing: 24.01.2022
(51) Int. Cl.: H04W 8/02, H04W 60/04, H04W 48/04, H04W 76/27

(54) **METHOD AND DEVICE FOR UPDATING LOCATION OF TERMINAL IN WIRELESS COMMUNICATION SYSTEM**
VERFAHREN UND VORRICHTUNG ZUR AKTUALISIERUNG DER POSITION EINES ENDGERÄTS IN EINEM DRAHTLOSKOMMUNIKATIONSSYSTEM
PROCÉDÉ ET DISPOSITIF DE MISE À JOUR DE L'EMPLACEMENT D'UN TERMINAL DANS UN SYSTÈME DE COMMUNICATION SANS FIL

(30) Priority: 25.01.2021 KR 20210010314
(43) Date of publication of application: 29.11.2023
(73) Proprietor: LG Electronics Inc., Yeongdeungpo-gu Seoul 07336 (KR)
(72) Inventor: PARK, Sangmin, Seoul 06772 (KR); YOUN, Myungjune, Seoul 06772 (KR)
(74) Representative: Maikowski & Ninnemann Patentanwälte Partnerschaft mbB
(86) International application number: PCT/KR2022/001222
(87) International publication number: WO 2022/158928

(56) References cited:
- WO-A1-2020/071889
- WO-A1-2020/252874
- US-A1- 2019 116 486
- US-A1- 2020 252 900
- "3rd Generation Partnership Project; Technical Specification Group Services and System Aspects; System Architecture for the 5G System; Stage 2 (Release 15)", 3GPP STANDARD ; TECHNICAL SPECIFICATION ; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.4.0, 28 September 2017 (2017-09-28), pages 1 - 152, XP051337398
- ANONYMOUS: "3rd Generation Partnership Project; Technical Specification Group Core Network and Terminals; Non-Access-Stratum (NAS) protocol for 5G System (5GS); Stage 3; (Release 17)", 3GPP STANDARD; TECHNICAL SPECIFICATION; 3GPP TS 24.501, vol. CT WG1, no. V17.1.0, 18 December 2020 (2020-12-18), pages 1 - 746, XP051975237
- ANONYMOUS: "3rd Generation Partnership Project; Technical Specification Group Radio Access Network; 5GS; User Equipment (UE) conformance specification; Part 1: Protocol (Release 16)", 3GPP STANDARD; TECHNICAL SPECIFICATION; 3GPP TS 38.523-1, vol. RAN WG5, no. V16.6.0, 4 January 2021 (2021-01-04), pages 1 - 385, XP051999732
- MOTOROLA MOBILITY, LENOVO, BROADCOM: "Support for Untrusted and Trusted non-3GPP access to SNPN", 3GPP DRAFT; S2-2003137, vol. SA WG2, 10 April 2020 (2020-04-10), pages 1 - 3, XP051874644
- ZTE: "Consistency of terms “5GMM-IDLE mode over non-3GPP access” and “5GMM- CONNECTED mode over non-3GPP access", 3GPP DRAFT; C1-207614, vol. CT WG1, 19 November 2020 (2020-11-19), pages 1 - 7, XP051955757

## Description

### Technical Field

The following description relates to a wireless communication system and, more particularly, to a method and apparatus for updating a location of a user equipment (UE) when a plurality of tracking area identifications (TAIs) is allocated to the UE based on a non-3GPP access method and a TAI of the UE is changed.

### Background

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

US 2019/0116486 A1 discloses a location reporting method including sending, by an access and mobility management function (AMF) device, a location reporting control message requesting a location of a UE to an access network; and receiving, by the AMF device, a location report message from the access network in response to the location reporting control message. The location reporting control message includes requested location information or a reporting type.

3GPP TS 23.501 V1.4.0 titled "3rd Generation Partnership Project; Technical Specification Group Services and System Aspects; System Architecture for the 5G System; Stage 2 (Release 15)" defines the Stage 2 system architecture for the 5G System. It covers both roaming and non-roaming scenarios in all aspects, including interworking between 5GS and EPS, mobility within 5GS, policy control and charging, and authentication.

US 2020/0252900 A1 discloses a service request procedure performed by an AMF in a wireless communication system. It includes receiving a packet data unit (PDU) session identifier for a PDU session whose activation is desired by a user equipment from the user equipment; transmitting a first message comprising the PDU session identifier to a session management function (SMF); when an establishment of the PDU session is rejected by the SMF: receiving a second message comprising a reject cause of the PDU session establishment as a response to the first message; and transmitting a service response message comprising the reject cause and a PDU session identifier rejected by the reject cause to the user equipment.

### Disclosure

### Technical Problem

The present disclosure relates to a method and apparatus for updating a location of a user equipment (UE) in a wireless communication system.

The present disclosure relates to a method of updating a location of a UE when a plurality of TAIs is allocated based on a non-3GPP access method in non-3GPP access in a wireless communication system and a TAI of the UE is changed.

The present disclosure relates to a method of providing location update information based on a service accept message or a configuration update command message in a wireless communication system.

The present disclosure relates to a method of including information indicating a situation in which a service request is rejected based on a TAI change in non-3GPP access in a service reject message in a wireless communication system.

The present disclosure relates to a method of performing a re-registration procedure by a user equipment (UE) based on a service reject message in a wireless communication system.

The technical objects to be achieved in the present disclosure are not limited to the above-mentioned technical objects, and other technical objects that are not mentioned may be considered by those skilled in the art through the embodiments described below.

### Technical Solution

The invention is defined by the independent claims. Features of certain embodiments are defined in the dependent claims.

### Advantageous Effects

The present disclosure can provide a method and apparatus for updating a location of a user equipment (UE) in a wireless communication system.

The present disclosure can provide a method of updating a location of a UE when a plurality of TAIs is allocated based on a non-3GPP access method in non-3GPP access in a wireless communication system and a TAI of the UE is changed.

The present disclosure can correctly update a location of a UE by providing location update information based on a service accept message or a configuration update command message in a wireless communication system.

The present disclosure can correctly update a location of a UE by including information indicating a situation in which a service request is rejected based on a TAI change in non-3GPP access in a service reject message in a wireless communication system.

The present disclosure can update a location by performing a re-registration procedure by a user equipment (UE) based on a service reject message in a wireless communication system.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

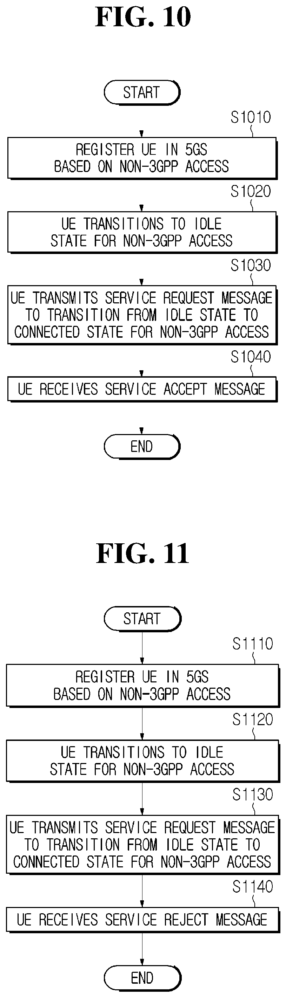

In the following description, the invention is described with particular reference to figures 10 and 11, while the description of the remaining figures is provided for illustrative purposes for a better understanding of the invention.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view illustrating various reference points.
FIG. 2 is a view illustrating an example of a network structure of an evolved universal terrestrial radio access network (E-UTRAN) to which the present disclosure is applicable.
FIG. 3 is a view illustrating a general E-URTAN and an example of an architecture of an evolved packet core (EPC).
FIG. 4 is a view illustrating an example of a structure of a radio interface protocol in a control plane between user equipment (UE) and evolved node B (eNB).
FIG. 5 is a view illustrating an example of a structure of a radio interface protocol in a user plane between UE and eNB.
FIG. 6 is a view illustrating an example of an architecture of a general new radio (NR)-radio access network (RAN).
FIG. 7 is a view illustrating an example of functional separation of a general NG-RAN and a 5th generation core (5GC).
FIG. 8 is a view illustrating an example of a general architecture of a 5th generation (5G) system.
FIG. 9 is a view illustrating an example of a wireless device applicable to the present disclosure.
FIG. 10 is a flowchart illustrating an operating method applied to the present disclosure.
FIG. 11 is a flowchart illustrating an operating method applied to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.
**3GPP LTE/EPS**
   - 3GPP TS 36.211: Physical channels and modulation
   - 3GPP TS 36.212: Multiplexing and channel coding
   - 3GPP TS 36.213: Physical layer procedures
   - 3GPP TS 36.214: Physical layer; Measurements
   - 3GPP TS 36.300: Overall description
   - 3GPP TS 36.304: User Equipment (UE) procedures in idle mode
   - 3GPP TS 36.306: User Equipment (UE) radio access capabilities
   - 3GPP TS 36.314: Layer 2 - Measurements
   - 3GPP TS 36.321: Medium Access Control (MAC) protocol
   - 3GPP TS 36.322: Radio Link Control (RLC) protocol
   - 3GPP TS 36.323: Packet Data Convergence Protocol (PDCP)
   - 3GPP TS 36.331: Radio Resource Control (RRC) protocol
   - 3GPP TS 36.413: S1 Application Protocol (S1AP)
   - 3GPP TS 36.423: X2 Application Protocol (X2AP)
   - 3GPPP TS 22.125: Unmanned Aerial System support in 3GPP; Stage 1
   - 3GPP TS 23.303: Proximity-based services (Prose); Stage 2
   - 3GPP TS 23.401: General Packet Radio Service (GPRS) enhancements for Evolved Universal Terrestrial Radio Access Network (E-UTRAN) access
   - 3GPP TS 23.402: Architecture enhancements for non-3GPP accesses
   - 3GPP TS 23.286: Application layer support for V2X services; Functional architecture and information flows
   - 3GPP TS 24.301: Non-Access-Stratum (NAS) protocol for Evolved Packet System (EPS); Stage 3
   - 3GPP TS 24.302: Access to the 3GPP Evolved Packet Core (EPC) via non-3GPP access networks; Stage 3
   - 3GPP TS 24.334: Proximity-services (ProSe) User Equipment (UE) to ProSe function protocol aspects; Stage 3
   - 3GPP TS 24.386: User Equipment (UE) to V2X control function; protocol aspects; Stage 3
**3GPP NR/5GS**
   - 3GPP TS 38.211: Physical channels and modulation
   - 3GPP TS 38.212: Multiplexing and channel coding
   - 3GPP TS 38.213: Physical layer procedures for control
   - 3GPP TS 38.214: Physical layer procedures for data
   - 3GPP TS 38.215: Physical layer measurements
   - 3GPP TS 38.300: NR and NG-RAN Overall Description
   - 3GPP TS 38.304: User Equipment (UE) procedures in idle mode and in RRC inactive state
   - 3GPP TS 38.321: Medium Access Control (MAC) protocol
   - 3GPP TS 38.322: Radio Link Control (RLC) protocol
   - 3GPP TS 38.323: Packet Data Convergence Protocol (PDCP)
   - 3GPP TS 38.331: Radio Resource Control (RRC) protocol
   - 3GPP TS 37.324: Service Data Adaptation Protocol (SDAP)
   - 3GPP TS 37.340: Multi-connectivity; Overall description
   - 3GPP TS 23.501: System Architecture for the 5G System
   - 3GPP TS 23.502: Procedures for the 5G System
   - 3GPP TS 23.503: Policy and Charging Control Framework for the 5G System; Stage 2
   - 3GPP TS 24.501: Non-Access-Stratum (NAS) protocol for 5G System (5GS); Stage 3
   - 3GPP TS 24.502: Access to the 3GPP 5G Core Network (5GCN) via non-3GPP access networks
   - 3GPP TS 24.526: User Equipment (UE) policies for 5G System (5GS); Stage 3
**3GPP V2X**
   - 3GPP TS 23.285: Architecture enhancements for V2X services
   - 3GPP TR 23.786: Evolved Packet System (EPS) and the 5G System (5GS) to support advanced V2X services
   - 3GPP TS 23.287: Architecture enhancements for 5G System (5GS) to support Vehicle-to-Everything (V2X) services
   - 3GPP TS 24.587: Vehicle-to-Everything (V2X) services in 5G System (5GS); Protocol aspects; Stage 3
   - 3GPP TS 24.588: Vehicle-to-Everything (V2X) services in 5G System (5GS); User Equipment (UE) policies; Stage 3

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

### Overview of 3GPP System

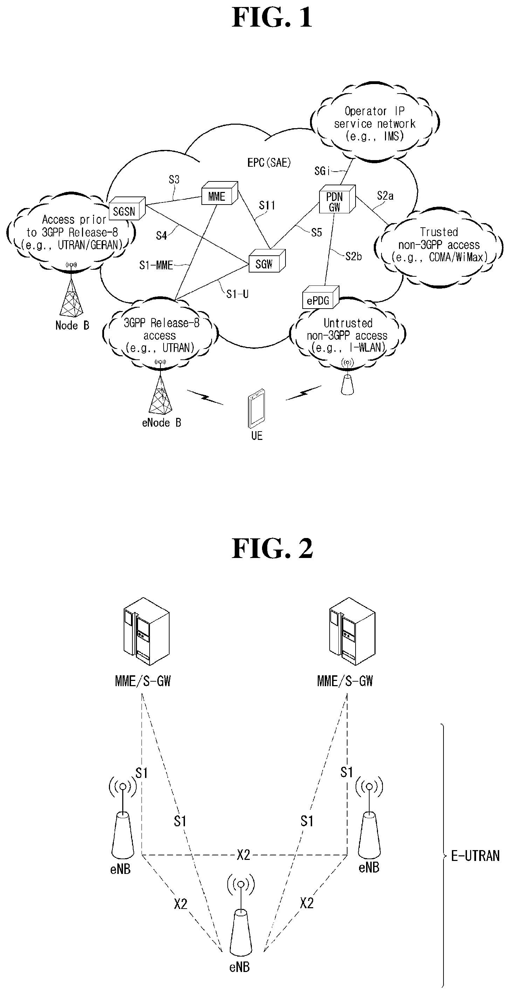

FIG. 1 illustrates various reference points.

An example of the network structure of FIG. 1 discloses an LTE/EPS-based network structure, and may operate with reference to matters described in standard documents published before this document. In the network structure of FIG. 1 , at least one of SGW, PDN GW, MME, SGSN, and ePDG entities may operate with reference to matters described in standard documents published before this document. In addition, S1-MME, S1-U, S2a, S2b, S3, S4, S5, S11, and SGi may exist as interfaces between each entity, which are described in the standard document published before this document. can do. In addition, other entities and interfaces may be configured with reference to matters described in standard documents published before this document described above, and are not limited to specific forms.

FIG. 2 illustrates an example of a network structure of an evolved universal terrestrial radio access network (E-UTRAN) to which the present disclosure is applicable.

An E-UTRAN system is an evolved version of the existing UTRAN system and may be, for example, 3GPP LTE/LTE-A system. Communication networks are widely deployed to provide various communication services such as voice (e.g., voice over Internet protocol (VoIP)) through IMS and packet data.

Referring to FIG. 2, an E-UMTS network includes an E-UTRAN, an EPC, and one or more UEs. The E-UTRAN consists of eNBs that provide control plane and user plane protocols to the UE, and the eNBs are interconnected with each other by means of the X2 interface, and reference may be made to matters described in standard documents published before this document.

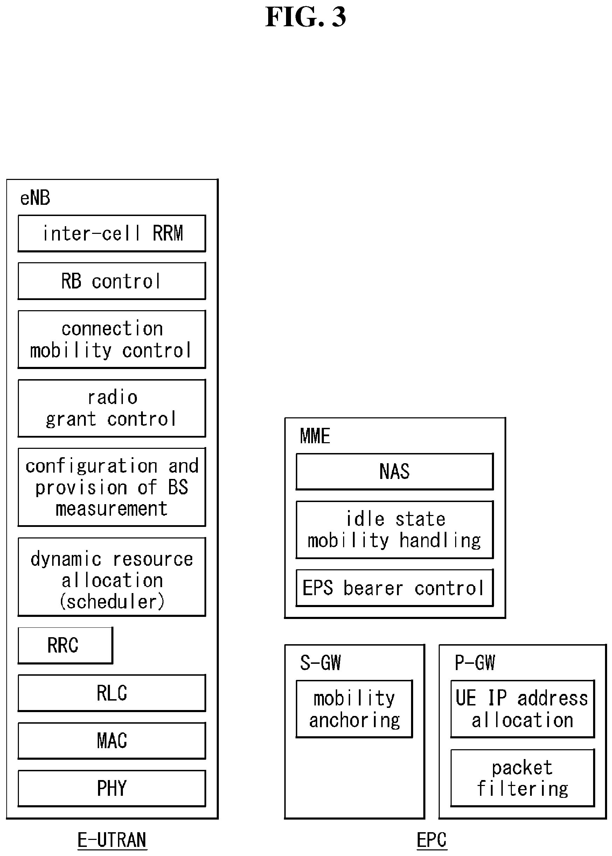

FIG. 3 is a view illustrating a general E-URTAN and an example of an architecture of an evolved packet core (EPC).

As illustrated in FIG. 3, the eNB can perform functions such as routing to gateway while radio resource control (RRC) connection is activated, scheduling and transmission of paging messages, scheduling and transmission of a broadcast channel (BCH), dynamic allocation of resources in uplink and downlink to the UE, configuration and provision for the measurement of the eNB, radio bearer control, radio admission control, and connection mobility control. The eNB can perform functions such as paging situation in the EPC, management of an LTE IDLE state, ciphering of a user plane, SAE bearer control, and ciphering and integrity protection of NAS signaling.

Annex J of 3GPP TR 23.799 shows various architectures combining 5G and 4G. And 3GPP TS 23.501 shows an architecture using NR and NGC.

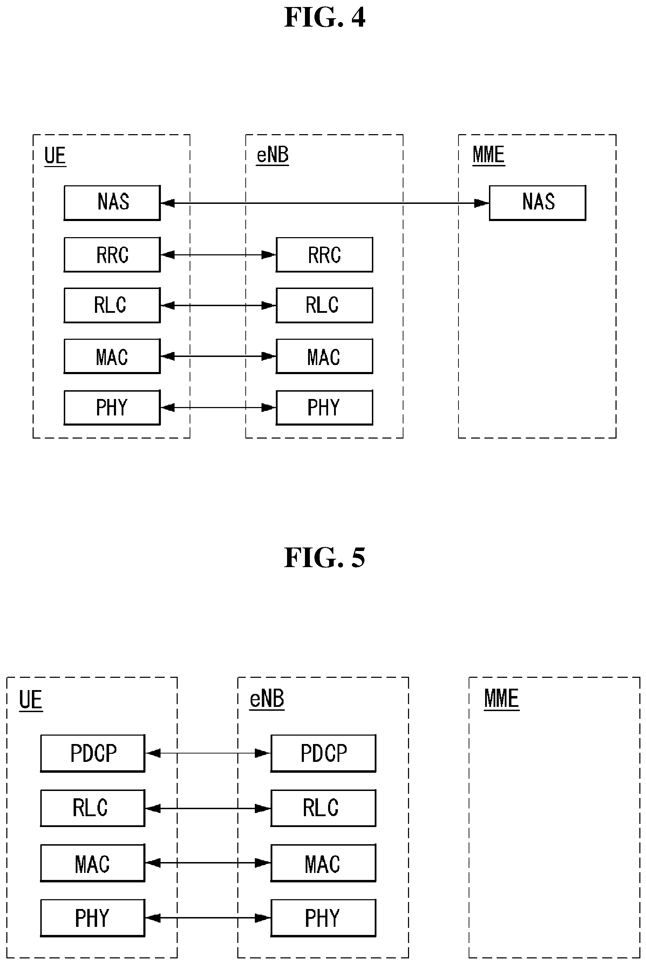

FIG. 4 is a view illustrating an example of a structure of a radio interface protocol in a control plane between user equipment (UE) and evolved node B (eNB), and FIG. 5 is view illustrating an example of a structure of a radio interface protocol in a user plane between UE and eNB.

The radio interface protocol is based on 3GPP radio access network standard. The radio interface protocol horizontally consists of a physical layer, a data link layer, and a network layer, and is vertically divided into a user plane for data information transmission and a control plane for control signaling delivery.

The protocol layers may be divided into L1 (first layer), L2 (second layer), and L3 (third layer) based upon three lower layers of an open system interconnection (OSI) standard model that is well known in the art of communication systems, and it is possible to refer to the matters described in the standard document published before this document described above.

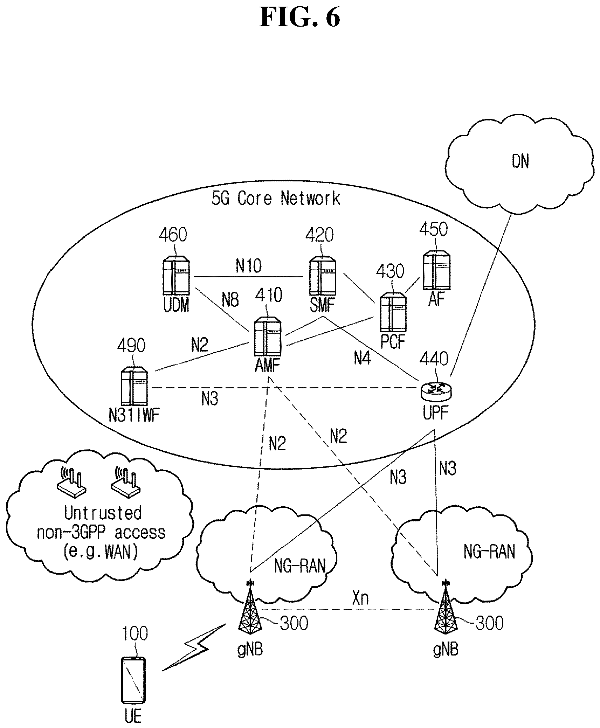

FIG. 6 is a view illustrating an example of a wireless communication system that is applied to the present disclosure.

5GC (5G Core) may include various components, part of which are shown in FIG. 6, including an access and mobility management function (AMF) 410, a session management function (SMF) 420, a policy control function (PCF) 430, a Prose user plane function (UPF) 440, an application function (AF) 450, unified data management (UDM) 460, and a non-3GPP interworking function (N3IWF) 490.

A UE 100 is connected to a data network via the UPF 440 through a next generation radio access network (NG-RAN) including the gNB 300. The UE 100 may be provided with a data service even through untrusted non-3GPP access, e.g., a wireless local area network (WLAN). In order to connect the non-3GPP access to a core network, the N3IWF 490 may be deployed.

The N3IWF 490 performs a function of managing interworking between the non-3 GPP access and the 5G system. When the UE 100 is connected to non-3GPP access (e.g., WiFi referred to as IEEE 801.11), the UE 100 may be connected to the 5G system through the N3IWF 490. The N3IWF 490 performs control signaling with the AMF 410 and is connected to the UPF 440 through an N3 interface for data transmission.

The AMF 410 may manage access and mobility in the 5G system. The AMF 410 may perform a function of managing (non-access stratum) NAS security. The AMF 410 may perform a function of handling mobility in an idle state.

The UPF 440 performs a function of gateway for transmitting and receiving user data. The UPF node 440 may perform the entirety or a portion of a user plane function of a serving gateway (S-GW) and a packet data network gateway (P-GW) of 4G mobile communication.

The UPF 440 is a component that operates as a boundary point between a next generation radio access network (NG-RAN) and the core network and maintains a data path between the gNB 300 and the SMF 420. In addition, when the UE 100 moves over an area served by the gNB 300, the UPF 440 serves as a mobility anchor point. The UPF 440 may perform a function of handling a PDU. For mobility within the NG-RAN (which is defined after 3GPP Release-15), the UPF 440 may route packets. In addition, the UPF 440 may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF 440 may correspond to a termination point of a data interface toward the data network.

The PCF 430 is a node that controls an operator's policy. The AF 450 is a server for providing various services to the UE 100. The UDM 460 is a server that manages subscriber information, such as home subscriber server (HSS) of 4G mobile communication. The UDM 460 stores and manages the subscriber information in a unified data repository (UDR).

The SMF 420 may perform a function of allocating an Internet protocol (IP) address of the UE 100. In addition, the SMF 420 may control a packet data unit (PDU) session.

For convenience of explanation, hereinafter, reference numerals may be omitted for AMF 410, SMF 420, PCF 430, UPF 440, AF 450, UDM 460, N3IWF 490, gNB 300, or UE 100, which may operate with reference to contents described in standard documents released earlier than the present document.

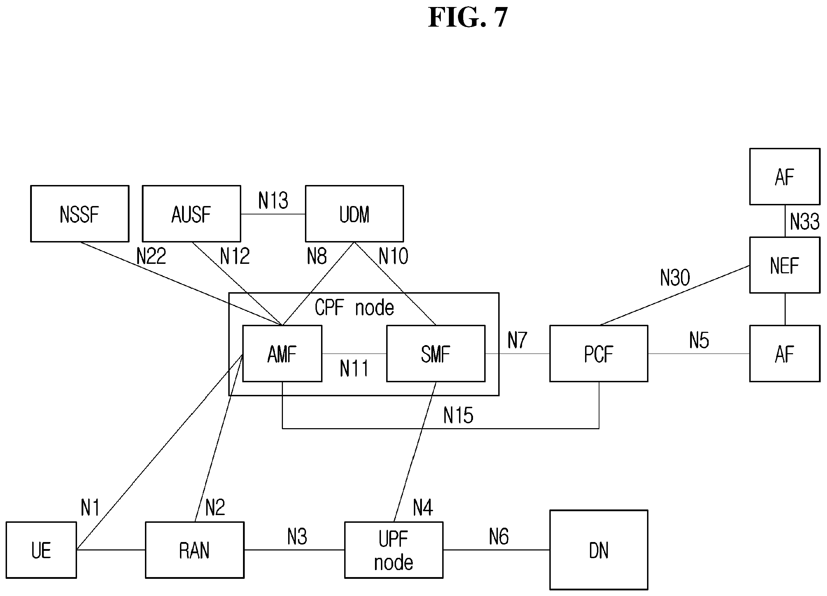

FIG. 7 is a view illustrating an example expressing a structure of a wireless communication system, which is applied to the present disclosure, from a node perspective.

Referring to FIG. 7, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 7 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

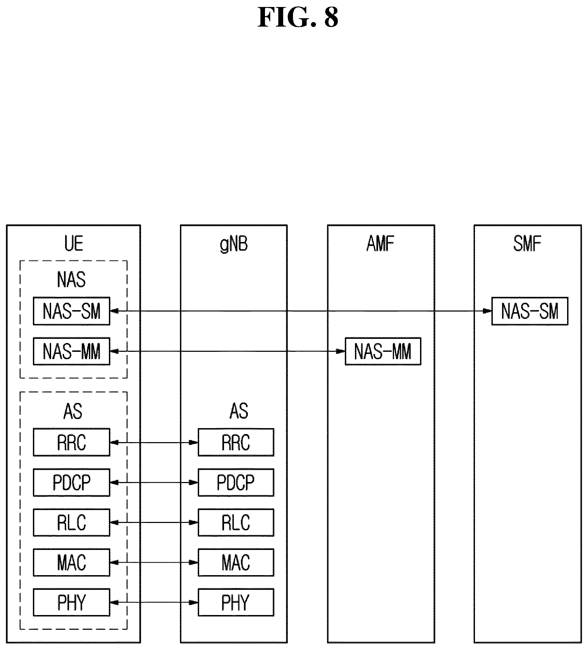

Hereinafter, the present disclosure will describe each layer of a radio protocol. FIG. 8 is a view illustrating an example of a radio interface protocol between UE and gBN.

Referring to FIG. 8, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

### Communication system applicable to the present disclosure

Although not limited thereto, various descriptions, functions, procedures, proposals, methods and/or operation flowcharts disclosed in the present disclosure are applicable to various fields requiring wireless communication/connection (e.g., 5G) between devices.

Hereinafter, it will be described in greater detail with reference to the drawings. In the following drawings/description, the same reference numerals may denote the same or corresponding hardware blocks, software blocks or functional blocks unless otherwise stated.

### Communication system applicable to the present disclosure

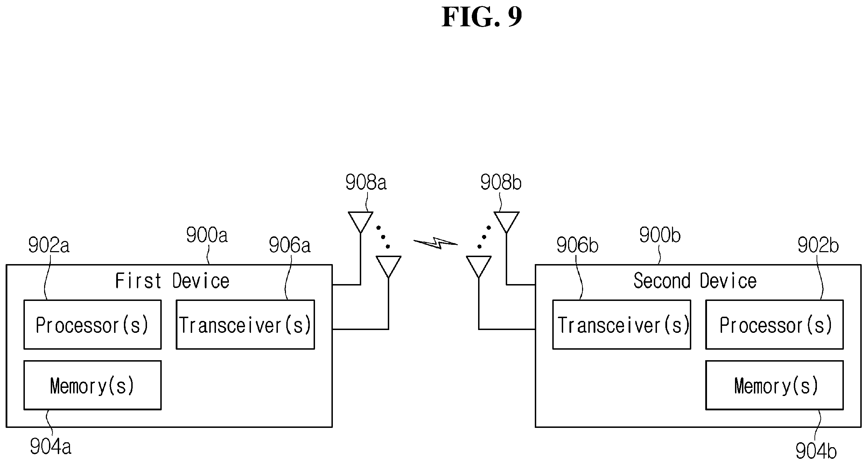

FIG. 9 is a view showing an example of a wireless device applicable to the present disclosure.

Referring to FIG. 9, a first wireless device 900a and a second wireless device 900b may transmit and receive radio signals through various radio access technologies (e.g., LTE or NR). Here, {the first wireless device 900a, the second wireless device 900b} may correspond to {the wireless device 100x, the base station 90} and/or {the wireless device 100x, the wireless device 100x}.

The first wireless device 900a may include one or more processors 902a and one or more memories 904a and may further include one or more transceivers 906a and/or one or more antennas 908a. The processor 902a may be configured to control the memory 904a and/or the transceiver 906a and to implement descriptions, functions, procedures, proposals, methods and/or operational flowcharts disclosed herein. For example, the processor 902a may process information in the memory 904a to generate first information/signal and then transmit a radio signal including the first information/signal through the transceiver 906a. In addition, the processor 902a may receive a radio signal including second information/signal through the transceiver 906a and then store information obtained from signal processing of the second information/signal in the memory 904a. The memory 904a may be coupled with the processor 902a, and store a variety of information related to operation of the processor 902a. For example, the memory 904a may store software code including instructions for performing all or some of the processes controlled by the processor 902a or performing the descriptions, functions, procedures, proposals, methods and/or operational flowcharts disclosed herein. Here, the processor 902a and the memory 904a may be part of a communication modem/circuit/chip designed to implement wireless communication technology (e.g., LTE or NR). The transceiver 906a may be coupled with the processor 902a to transmit and/or receive radio signals through one or more antennas 908a. The transceiver 906a may include a transmitter and/or a receiver. The transceiver 906a may be used interchangeably with a radio frequency (RF) unit. In the present disclosure, the wireless device may refer to a communication modem/circuit/chip.

The second wireless device 900b may include one or more processors 902b and one or more memories 904b and may further include one or more transceivers 906b and/or one or more antennas 908b. The processor 902b may be configured to control the memory 904b and/or the transceiver 906b and to implement the descriptions, functions, procedures, proposals, methods and/or operational flowcharts disclosed herein. For example, the processor 902b may process information in the memory 904b to generate third information/signal and then transmit the third information/signal through the transceiver 906b. In addition, the processor 902b may receive a radio signal including fourth information/signal through the transceiver 906b and then store information obtained from signal processing of the fourth information/signal in the memory 904b. The memory 904b may be coupled with the processor 902b to store a variety of information related to operation of the processor 902b. For example, the memory 904b may store software code including instructions for performing all or some of the processes controlled by the processor 902b or performing the descriptions, functions, procedures, proposals, methods and/or operational flowcharts disclosed herein. Herein, the processor 902b and the memory 904b may be part of a communication modem/circuit/chip designed to implement wireless communication technology (e.g., LTE or NR). The transceiver 906b may be coupled with the processor 902b to transmit and/or receive radio signals through one or more antennas 908b. The transceiver 906b may include a transmitter and/or a receiver. The transceiver 906b may be used interchangeably with a radio frequency (RF) unit. In the present disclosure, the wireless device may refer to a communication modem/circuit/chip.

In addition, the structure of a wireless device applicable to the present disclosure is not limited to FIG. 9, and may be configured in various forms. In particular, the present disclosure may be applied to a wireless device that performs an operation for transmitting and/or receiving a wireless signal, and is not limited to a specific form.

In a new communication system (e.g., 5G system, 5GS), a user equipment (UE) may receive a data service through non-3GPP access. For example, in the existing communication system, non-3GPP access could be accessed through a separate passage based on the user plane, but in a new communication system, when a UE connects non-3GPP access to a core network, the UE may be supported access to a 5GS through a N3IWF. As a specific example, when the UE performs access to the 5GS through a wireless local area network (WLAN), the UE may be supported access through the N3IWF. In this case, the N3IWF may perform a function of managing interworking between the non-3GPP access and the 5GS. The N3IWF performs control signaling with the AMF and may be connected to a UPF through a N3 interface for data transmission. In addition, tracking area (TA) management could not be performed in the existing non-3GPP access. For example, if the UE is located in the non-3GPP access area, it may be in a connected state, and if it is located outside the non-3GPP access area, it may be in an idle state. Here, since non-3GPP access and 3GPP access are distinguished in the existing system and the UE cannot be supported connection through paging or other operations outside the non-3GPP access area, TA management is not performed for non-3GPP access, and only TA could be given.

Also, as an example, a registration area (RA) may be set based on a set of TAs. For example, even if the TA of the UE is changed, if it is in the same RA, a TA update procedure may not be performed, and each configuration or parameters of the UE may be allocated based on the RA.

Here, as an example, integrated non-3GPP access may be applied in a new communication system (e.g., 5GS). Therefore, non-3GPP access may also be applied as one radio access technology (RAT) of 5GS similar to LTE or NR. In view of the above point, an AS procedure and a NAS procedure may be defined in consideration of non-3GPP access. As a specific example, the AS procedures and NAS procedures for non-3GPSS access may refer to 3GPP TS 23.501, TS 23.502, TS 24.501, and TS 24.502 documents disclosed before the present invention, but may not be limited thereto.

Also, for example, in a new communication system, a network slice may be applied based on non-3GPP access. The network slice may refer to a network structure that enables multiplexing of virtualized independent logical networks in the same physical network infrastructure. As an example, each network slice may be each network segmented based on service requirements. The network slices may also be applied to non-3GPP access. For example, allowed network slice selection assistance information (NSSAI) and rejected NSSAI for the network slice may also be managed in units of the aforementioned RA. That is, when the RAs are the same, the allowed NSSAIs may be equally supported.

At this time, for example, since non-3GPP access may be integrated and applied in a new communication system, NSSAI may be independently managed for each access type in relation to a network slice. That is, NSSAI for each of non-3GPP access and 3GPP access may be managed. Considering the above points, a single RA may be allocated to non-3GPP access.

However, as an example, in a new communication system (e.g., 5G system, 5GS), various non-3GPP access (e.g., untrusted non-3gpp access, trusted non-3gpp access, wireline non-3gpp access) methods may be introduced. That is, one non-3GPP access type could be considered in the past, but various types of non-3GPP access may be considered in the new communication system. For example, non-reliable non-3GPP access as non-3GPP access is access that is not operated by an operator like WiFi, and access to a 5GS may be supported based on a N3IWF. On the other hand, trusted non-3GPP access as non-3GPP access is access operated by a 5GS network operator, and access to a 5GS may be supported based on a trusted non-3GPP gateway function (TNGF). Also, as an example, wired non-3GPP access as non-3GPP access is access to a fixed wireline, and access to a 5GS may be supported based on a wireline access gateway function (W-AGF).

In this case, as described above, non-3GPP access methods may vary. Here, since only a single RA and a slice corresponding thereto may be supported for non-3GPP access in the existing system, network slice support may be limited when various non-3GPP access methods are applied. That is, if various non-3GPP access methods are managed as one as before, there may be limitations in management.

Considering the above point, in a new communication system, each tracking area identifier (TAI) may be allocated for each non-3GPP access method. For example, unlike the existing method in which each TAI may be allocated for each non-3GPP access, each TAI may be allocated for each non-3GPP access method. At this time, the AMF may receive S-NSSAI information supported based on the TAI from each function (e.g., N3IWF, trusted non-3GPP gateway function (TNGF), wireline access gateway function (W-AGF)) based on non-3GPP access, as shown in Table 1 below. In this case, the above information may be provided in a process of establishing access.

**Table 1**

| | | | | | | |
|---|---|---|---|---|---|---|
| I TAI Slice Support List | M | | Slice Support List | Supported S-NSSAIs per TA. | - | |

That is, different TAIs may be allocated based on a non-3GPP access method, and configurations for each network slice may be set based on the different TAIs. Hereinafter, a method of subdividing non-3GPP access and allocating a TAI will be described.

For example, when a UE accesses a network through 3GPP access, the AMF may allocate a set of TAs included in a TAI list to the UE based on the RA. When the AMF allocates the RA to the UE, the UE may obtain various information related to the RA from the AMF. For example, information related to the RA may include information on a movement pattern, an allowed area, and a forbidden area, but may not be limited thereto. The AMF may set RAs for all PLMNs as serving areas and provide information about them to the UE.

On the other hand, as an example, as described above, a TAI may be allocated for each non-3GPP access type within a PLMN. In this case, TAI values for each non-3GPP access may be delivered based on a N2 configuration procedure. For example, when the UE is registered in a network through non-3GPP access, the AMF may allocate the RA to the UE. In this case, the RA may include TAIs corresponding to each function in which the UE may be registered in the 5GS. In this case, TAI values for each non-3GPP access may be delivered based on the N2 configuration procedure. For example, in the N2 configuration procedure, the AMF may provide the information in Table 2 below to an access node.

**Table 2**

| |
|---|
| a) the AMF Name and the GUAMI(s) configured on that AMF Name; |
| b) the set of TNL associations to be established between the NG-RAN node and the AMF; |
| c) weight factor associated with each of the TNL association within the AMF; and |
| d) weight factor for each AMF Name within the AMF Set; and |
| e) (optional) for each GUAMI(s) configured on that AMF the corresponding backup AMF Name. |

As another example, a plurality of TAIs may be allocated even within the same non-3GPP access method. As a specific example, when there are a plurality of N3IWFs, each TAI may be allocated to the N3IWFs. As another example, a plurality of TAIs may be allocated to the same N3IWF.

In the above situation, when the UE is registered in the 5GS through non-3GPP access, the UE may have a TAI1 value for the RA that the UE has. However, this is only one example and is not limited to the above-described embodiment. Thereafter, the UE may transition to an idle state for non-3GPP access and then transition to a connected state again. At this time, the UE may perform a service request procedure to transition to the connected state.

Here, based on 3GPP access, the UE may obtain TAI information broadcast through a base station. On the other hand, since TAI information is not broadcast in non-3GPP access, the UE may not accurately recognize the TAI at which it is currently located. For example, the UE may be out of the RA and move to another TA based on the movement of the UE. At this time, since the UE cannot receive the TAI from non-3GPP access, the UE may transmit a service request message without recognizing that the UE leaves the RA. At this time, based on the movement of the UE, a new N3IWF may successfully perform IKE tunnel setup for the UE and deliver a NAS message to the AMF. Here, TAI2 may be delivered as a new TAI. However, this is only one example and is not limited to the above-described embodiment.

Since the AMF received the service request through a TAI (TAI2) different from the TAI (TAI1) for the previously allocated RA of the UE, the service request of the UE may not be processed and it may be determined to be a malfunction. For example, in the case of 3GPP access, since the UE performs location update based on broadcast TAI information, the above-mentioned situation may not occur. But, in the case of non-3GPP access, since the TAI is not broadcast, the above-described problems may occur. That is, when the TAI is changed based on the movement of the UE, the UE may not be provided with a service based on non-3GPP access, and a method for supporting this may be required.

For example, when the UE receives a service through non-3GPP access and configures a plurality of TAs within the same non-3GPP access method (e.g., untrusted/trusted/wireline) in the network, the UE may make a service request in a state of being out of the RA. At this time, the UE may perform new N3IWF selection, and through this, generate an IKE tunnel for NAS signaling transmission to transmit a service request. Based on the foregoing, the AMF may receive the service request of the UE through non-3GPP access. In this case, as described above, when the TA to which the service request is delivered is not included in the RA stored in the context of the UE, the AMF may perform a location update procedure of the UE in consideration of the TA of the service request.

As a specific example, the AMF may perform a location update procedure of the UE based on the RA stored in the context of the UE. That is, when the TA to which the service request is delivered is not included in the RA stored in the context of the UE, the AMF may perform the location update procedure performed in the RA update procedure within the service request procedure. For example, the AMF may update the RA of the UE context based on the above, and perform a PDU session release operation according to NSSAI allowed based on the RA, rejected NSSAI, and corresponding S-NSSAI removal. After that, the AMF may deliver the synchronization result of the PDU session to the UE through a PDU session status IE through a service accept message. In addition, the AMF may include a TAI list (RA information), allowed NSSAI, and rejected NSSAI information in a service accept message and transmit it to the UE.

As another example, when the TA to which the service request is delivered is not included in the RA stored in the context of the UE, the AMF may update the location of the UE based on a UE configuration update procedure.

For example, when the TA to which the service request is delivered is not included in the RA stored in the context of the UE, the AMF may perform location update performed in the RA update procedure within the service request procedure. For example, the AMF may perform RA update of the UE context based on the above, and perform a PDU session release operation according to NSSAI allowed based on the RA, rejected NSSAI, and corresponding S-NSSAI removal.

After that, the AMF may transmit a configuration update command message to the UE in a state in which the NAS signaling connection of the UE is performed. In this case, the configuration update command message may include a location update result. That is, the UE may receive the location update result based on the configuration update command message. For example, an information element (IE) in the configuration update command message may include the above-described TAI list information, NSSAI allowed based on the RA and rejected NSSAI information. In addition, as an example, when the PDU session is released based on the allowed NSSAI change, the AMF may reflect the corresponding information in the PDU session state IE in the service accept message and deliver it to the UE.

For example, the AMF may transmit the configuration update command message to the UE before transmitting the service accept message. As another example, the AMF may first transmit a service accept message and then perform a UE configuration update procedure, which is not limited to a specific embodiment.

As another example, if the TA to which the service request is delivered is not included in the RA stored in the context of the UE, the AMF may determine that the location of the UE has moved because the UE made a service request through a TA not included in the RA. At this time, the AMF may reject the service request of the UE and deliver a service reject message to the UE because the UE has made the service request through the TA not included in the RA.

Here, as an example, the service reject message may include a new rejection cause (New 5GMM cause) indicating that the TA to which the service request is delivered is not included in the RA stored in the context of the UE. For example, a new cause value may indicate to the UE that the TA to which the service request is delivered is not included in the RA stored in the context of the UE based on the above-described situation. That is, the UE may recognize that the service request has been rejected based on the fact that the TA to which the service request is delivered is not included in the RA stored in the context of the UE through the above-mentioned cause value.

As another example, the service reject message may include indicator information indicating that the UE is out of the RA. In addition, the service reject message may include information indicating that the UE requires new registration. For example, the above information may be included in a service reject message in the form of a new IE. That is, at least one of indicator information indicating that the UE is out of the RA or indicator information indicating that new registration of the UE is required may be included in the service reject message in the form of a new IE.

As another example, the above information may be indicated by being included in the form of bits/flags in the IE, and is not limited to a specific embodiment.

When the UE receives the service reject message based on the above-described information, the UE may release the NAS signaling connection and the IKE signaling and transition to an idle state. At this time, the 5GU status (5G Update Status) of the UE may be set to "5U2: not updated". After that, the UE may perform a registration procedure. In this case, the 5GS registration type IE of the registration request message may be set to an initial request or mobility registration updating. At this time, for example, when there is data or signaling to be transmitted after the UE transitions to the connected mode, the UE may set the "follow-on request bit" to a first value. In this case, the first value may indicate that there is data or signaling to be transmitted after the UE transitions to the connected mode.

After that, the UE may generate a new IKE tunnel with a N3IWF and deliver a NAS message to the AMF. Thereafter, the AMF may reallocate location update, UE context update, and allowed/rejected NSSAI according to the registration request, and release the PDU session based on the reallocated NSSAI. In addition, the AMF may transmit a registration accept message including at least one of new RA information (TAI list), allowed NSSAI, rejected NSSAI, and PDU session status to the UE. For example, when the UE makes a request by setting the "follow-on request bit" to a first value, the AMF may maintain a NAS signal connection without releasing it after the registration procedure. The UE may process the registration accept message and update RA and NSSAI information for non-3GPP access.

As another example, the UE may retransmit the registration request message without releasing IKE signaling. In this case, the 5GS registration type IE of the registration request may be set to an initial request or mobility registration updating. At this time, for example, when there is data or signaling to be transmitted after the UE transitions to the connected mode, the UE may set the "follow-on request bit" to a first value. In this case, the first value may indicate that there is data or signaling to be transmitted after the UE transitions to the connected mode.

As another example, if the TA to which the service request is delivered is not included in the RA stored in the context of the UE, the AMF may transmit a configuration update command message to the UE while maintaining the NAS signaling connection of the UE. At this time, the configuration update command message may include information indicating that re-registration is required. For example, information indicating that re-registration is required may be "registration requested" information, but may not be limited thereto. Also, as an example, the configuration update command message may include TAI list information including new TAI information. The UE, which has received the above-described information, may transmit a configuration update complete message to the AMF as an ACK message.

For example, the AMF may transmit the configuration update command message to the UE before transmitting a response to the service request of the UE. As another example, the AMF may transmit the configuration update command message after transmitting a service accept message based on the service request of the UE, and may not be limited to a specific form.

Thereafter, the UE may release both IKE signaling and NAS signaling to transition to an idle state, and then perform a registration procedure. As another example, the UE may perform a registration procedure while maintaining IKE signaling and NAS signaling, and may not be limited to a specific form.

As another example, information indicating re-registration of the UE may be included in a service accept message instead of the configuration update command message.

As another example, after the AMF transmits the service accept message to the UE, registration of the UE may be canceled. In this case, information indicating re-registration of the UE may be included in the message for canceling registration of the UE and may not be limited to a specific embodiment.

FIG. 10 is a view illustrating a UE operating method applied to the present disclosure.

A UE registers in a 5GS based on non-3GPP access. (S1010) At this time, as described above in FIGS. 1 to 9, a plurality of TAIs may be allocated to non-3GPP access based on a non-3GPP access method. Accordingly, when the UE performs registration in the 5GS based on non-3GPP access, a specific TAI among a plurality of TAIs allocated to non-3GPP access may be allocated to an RA of the UE context. At this time, the UE transitions to an idle state for non-3GPP access. (S1020) Then, the UE performs a service request procedure to transition to a connected state for non-3GPP access. That is, the UE may transmit a service request message. (S1030) At this time, as an example, the RA of the context of the registered UE may be a first TAI. Here, based on the movement of the UE, the service request message is transmitted based on a second TAI. For example, since non-3GPP access does not broadcast a TAI, mobility of the UE may not be recognized, and accordingly, a situation in which the UE transmits a service request message based on the second TAI may occur. In the above situation, a location update operation of the UE may be required.

For example, the location update of the UE may be performed within a service procedure, and the UE may receive a service accept message including updated location-related information. (S1040) More specifically, when the UE performs a service request procedure, the UE may transmit a service request to the AMF, and the AMF may perform registration update of the UE within the service request procedure based on the changed second TAI. Here, when the registration update of the UE is performed, the RA of the context of the UE is updated based on the changed second TAI, and allowed NSSAI and rejected NSSAI may be set based on the updated RA. At this time, a PDU session release operation may be performed based on the set allowed NSSAI and rejected NSSAI.

In addition, the UE receives the service accept message based on the service request, but the service accept message may include at least one of PDU session status information, updated RA information, allowed NSSAI information, or rejected NSSAI information, through which updated location-related information may be obtained.

FIG. 11 is a view illustrating a UE operating method applied to the present disclosure.

A UE registers in a 5GS based on non-3GPP access. (S1110) At this time, as described above in FIGS. 1 to 9, a plurality of TAIs may be allocated to non-3GPP access based on a non-3GPP access method. Accordingly, when a UE performs registration in the 5GS based on non-3GPP access, a specific TAI among a plurality of TAIs allocated to non-3GPP access may be allocated to an RA of the UE context. At this time, the UE transitions to an idle state for non-3GPP access. (S1120) Then, the UE performs a service request procedure to transition to a connected state for non-3GPP access. That is, the UE transmits a service request message. (S1130) At this time, the RA of the context of the registered UE is a first TAI. Here, based on the movement of the UE, the service request message is transmitted based on a second TAI. For example, since non-3GPP access does not broadcast a TAI, mobility of the UE may not be recognized, and accordingly, a situation in which the UE transmits a service request message based on the second TAI may occur. In the above situation, a location update operation of the UE may be required.

For example, the UE may receive a service reject message from the AMF based on the changed second TAI. (S 1140) At this time, the service reject message may include at least one of rejection cause information, first indicator information, or second indicator information. Here, the rejection cause information may include a cause value indicating that the UE is not located in the RA of non-3GPP access based on the second TAI. That is, the UE may recognize that the service request has been rejected because the UE is not located in the RA of non-3GPP access based on the above-mentioned cause value.

In addition, the first indicator may be information indicating that the UE is not located in the RA, and the second indicator may be information indicating that new registration is required for the UE. For example, the UE may perform a registration procedure based on the above information. Here, the UE may perform a registration procedure after releasing s NAS signaling connection and transitioning to an idle state. As another example, the UE may perform a registration procedure for the UE while maintaining the AMF and NAS signaling connection, as described above.

Based on the foregoing, mobility of the UE may be supported in in untrusted non-3GPP access, trusted non-3GPP access, and wired non-3GPP access, and may be equally applied to other non-3GPP access and is not limited to a specific form. That is, when a plurality of TAs for non-3GPP access is configured in the 5GS, the UE may receive the service based on location update through a location update method according to the mobility of the UE.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein. The above exemplary embodiments are therefore to be construed in all aspects as illustrative and not restrictive. The scope of the invention is determined by the appended claims, not by the above description. Moreover, it will be apparent that some claims referring to specific claims may be combined with another claims referring to the other claims other than the specific claims to constitute the embodiment or add new claims by means of amendment after the application is filed.

### [Industrial Availability]

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method of updating a location of a user equipment, UE, (100, 900a) in a wireless communication system, the method comprising:
registering (S1010, S1110), by the UE (100, 900a), in a 5G system, 5GS, through non-3GPP access;
transitioning (S1020, S1120), by the UE (100, 900a), to an idle state for the non-3GPP access; and
initiating, by the UE (100, 900a), a service request procedure by transmitting (S1030, S1130) a service request message to transition from the idle state to a connected state for the non-3GPP access,
**characterized in that**,
based on that the UE (100, 900a) is registered in the 5GS through the non-3GPP access, a tracking area identification, TAI, for a registration area, RA, of context of the UE (100, 900a) is set to a first TAI, and the service request procedure includes a UE location update procedure based on a tracking area, TA, to which the service request message is transmitted.

2. The method of claim 1,
wherein, based on that the first TAI for the RA of the context of the UE (100, 900a) is changed to a second TAI, registration update of the UE (100, 900a) is performed within the service request procedure.

3. The method of claim 2,
wherein, based on that the registration update of the UE (100, 900a) is performed, the RA of the context of the UE (100, 900a) is updated based on the changed second TAI,
wherein allowed network slice selection assistance information, NSSAI, and rejected NSSAI are set based on the updated RA, and
wherein a packet data unit, PDU, session release operation is performed based on the set allowed NSSAI and rejected NSSAI.

4. The method of claim 3,
wherein the UE (100, 900a) receives (S1040) a service accept message based on the service request message, and
wherein the service accept message comprises at least one of PDU session status information, the updated RA information, the allowed NSSAI information or the rejected NSSAI information.

5. The method of claim 3,
wherein the UE (100, 900a) receives a configuration update command message based on non access stratum, NAS, signaling from an access and mobility management function, AMF, (410), and
wherein the configuration update message comprises at least one of the updated RA information, the allowed NSSAI information or the rejected NSSAI information.

6. The method of claim 5, wherein the UE (100, 900a) receives (S1040) a service accept message including PDU session status information from the AMF (410) based on that a PDU session is released based on the allowed NSSAI and the rejected NSSAI.

7. The method of claim 6, wherein the UE (100, 900a) receives (S1040) the service accept message after receiving the configuration update message.

8. The method of claim 7, wherein the UE (100, 900a) receives (S1140) a service reject message from the AMF (410) based on the changed second TAI.

9. The method of claim 8, wherein the service reject message comprises at least one of rejection cause information, first indicator information or second indicator information.

10. The method of claim 9, wherein the rejection cause information comprises a cause value indicating that the UE (100, 900a) is not located in the RA of the non-3GPP access based on the second TAI.

11. The method of claim 9,
wherein the first indicator information is information indicating that the UE (100, 900a) is not located in the RA, and
wherein the second indicator information is information indicating that new registration is required for the UE (100, 900a).

12. The method of claim 11, wherein the UE (100, 900a) performs a registration procedure after releasing a NAS signaling connection based on the second indicator and transitioning to an idle state.

13. The method of claim 12,
wherein the UE (100, 900a) receives a configuration update command message including information indicating that re-registration of the UE (100, 900a) is required while maintaining a NAS signaling connection with the AMF (410), and
wherein a registration procedure is performed again based on the configuration update command message.

14. A user equipment, UE, (100, 900a) operating in a wireless communication system, the UE (100, 900a) comprises:
at least one transceiver (906a);
at least one processor (902a); and
at least one memory (904a) operably connected to the at least one processor (902a) and configured to store instructions that, when executed, cause the at least one processor (902a) to perform a specific operation,
wherein the specific operation comprises:
registering (S1010, S1110) in a 5G system, 5GS, through non-3GPP access;
transitioning (S1020, S1120) to an idle state for the non-3GPP access; and
initiating a service request procedure by transmitting (S1030, S1130) a service request message so that the UE (100, 900a) transitions from the idle state to a connected state for the non-3GPP access,
**characterized in that**,
based on that the UE is registered in the 5GS through the non-3GPP access, a tracking area identification, TAI, for a registration area, RA, of context of the UE (100, 900a) is set to a first TAI, and the service request procedure is performed based on a tracking area, TA, to which the service request message is transmitted..

15. An access and mobility management function, AMF, (410) operating in a wireless communication system, the network comprises:
at least one transceiver;
at least one processor; and
at least one memory operably connected to the at least one processor and configured to store instructions that, when executed, cause the at least one processor to perform a specific operation,
wherein the specific operation comprises:
registering a user equipment, UE, (100, 900a) in a 5G system, 5GS, through non-3GPP access; and
performing a service request procedure based on a service request message from the UE (100, 900a) for transitioning from an idle state to a connected state; and
**characterized in that**,
based on that the UE (100, 900a) is registered in the 5GS through the non-3GPP access, a tracking area identification, TAI, for a registration area, RA of context of the UE (100, 900a) is set to a first TAI, and the service request procedure is performed based on a tracking area, TA, to which the service request message is transmitted.

## Patentansprüche

1. Verfahren zum Aktualisieren einer Position eines Benutzergeräts, UE, (100, 900a) in einem Drahtloskommunikationssystem, wobei das Verfahren umfasst:
Registrieren (S1010, S1110), durch das UE (100, 900a), in einem 5G-System, 5GS, durch Nicht-3GPP-Zugriff;
Wechseln (S1020, S1120), durch das UE (100, 900a), in einen Ruhezustand für den Nicht-3GPP-Zugriff und
Initiieren, durch das UE (100, 900a), einer Dienstanforderungsprozedur durch Übertragen (S1030, S1130) einer Dienstanforderungsnachricht zum Wechseln vom Ruhezustand in einen verbundenen Zustand für den Nicht-3GPP-Zugriff,
**dadurch gekennzeichnet, dass**,
basierend darauf, dass das UE (100, 900a) durch den Nicht-3GPP-Zugriff im 5GS registriert wird, eine Tracking-Bereichs-Kennung, TAI, für einen Registrierungsbereich, RA, eines Kontexts des UE (100, 900a) auf eine erste TAI festgelegt wird und die Dienstanforderungsprozedur eine UE-Positionsaktualisierungsprozedur basierend auf einem Tracking-Bereich, TA, an den die Dienstanforderungsnachricht übertragen wird, einschließt.

2. Verfahren nach Anspruch 1,
wobei basierend darauf, dass die erste TAI für den RA des Kontexts des UE (100, 900a) zu einer zweiten TAI geändert wird, eine Registrierungsaktualisierung des UE (100, 900a) innerhalb der Dienstanforderungsprozedur durchgeführt wird.

3. Verfahren nach Anspruch 2,
wobei basierend darauf, dass die Registrierungsaktualisierung des UE (100, 900a) durchgeführt wird, der RA des Kontexts des UE (100, 900a) basierend auf der geänderten zweiten TAI aktualisiert wird,
wobei erlaubte Netzwerk-Slice-Auswahl-Unterstützungsinformationen, NSSAI, und abgelehnte NSSAI basierend auf dem aktualisierten RA festgelegt werden und wobei eine Paketdateneinheitssitzungsfreigabeoperation, PDU-Sitzungsfreigabeoperation, basierend auf dem Satz erlaubter NSSAI und abgelehnter NSSAI durchgeführt wird.

4. Verfahren nach Anspruch 3,
wobei das UE (100, 900a) eine Dienstannahmenachricht basierend auf der Dienstanforderungsnachricht empfängt (S1040) und
wobei die Dienstannahmenachricht mindestens eines von PDU-Sitzungsstatusinformationen, den aktualisierten RA-Informationen, den erlaubten NSSAI-Informationen oder den abgelehnten NSSAI-Informationen umfasst.

5. Verfahren nach Anspruch 3,
wobei das UE (100, 900a) eine Konfigurationsaktualisierungsbefehlsnachricht basierend auf einer Nichtzugriffsschichtsignalisierung, NAS-Signalisierung, von einer Zugriffs- und Mobilitätsverwaltungsfunktion, AMF, (410) empfängt und
wobei die Konfigurationsaktualisierungsnachricht mindestens eines von den aktualisierten RA-Informationen, den erlaubten NSSAI-Informationen oder den abgelehnten NSSAI-Informationen umfasst.

6. Verfahren nach Anspruch 5, wobei das UE (100, 900a) eine Dienstannahmenachricht, einschließlich PDU-Sitzungsstatusinformationen, von der AMF (410) basierend darauf, dass eine PDU-Sitzung basierend auf den erlaubten NSSAI und den abgelehnten NSSAI freigegeben wird, empfängt (S1040).

7. Verfahren nach Anspruch 6, wobei das UE (100, 900a) die Dienstannahmenachricht nach dem Empfangen der Konfigurationsaktualisierungsnachricht empfängt (S1040).

8. Verfahren nach Anspruch 7, wobei das UE (100, 900a) eine Dienstablehnungsnachricht von der AMF (410) basierend auf der geänderten zweiten TAI empfängt (S1140).

9. Verfahren nach Anspruch 8, wobei die Dienstablehnungsnachricht mindestens eines von Ablehnungsgrundinformationen, ersten Indikatorinformationen oder zweiten Indikatorinformationen umfasst.

10. Verfahren nach Anspruch 9, wobei die Ablehnungsgrundinformationen einen Grundwert umfassen, der angibt, dass sich das UE (100, 900a) nicht im RA des Nicht-3GPP-Zugriffs basierend auf der zweiten TAI befindet.

11. Verfahren nach Anspruch 9,
wobei die ersten Indikatorinformationen Informationen sind, die angeben, dass sich das UE (100, 900a) nicht im RA befindet, und
wobei die zweiten Indikatorinformationen Informationen sind, die angeben, dass eine Neuregistrierung für das UE (100, 900a) erforderlich ist.

12. Verfahren nach Anspruch 11, wobei das UE (100, 900a) eine Registrierungsprozedur nach dem Freigeben einer NAS-Signalisierungs-Verbindung basierend auf dem zweiten Indikator und Wechseln in einen Ruhezustand durchführt.

13. Verfahren nach Anspruch 12,
wobei das UE (100, 900a) eine Konfigurationsaktualisierungsbefehlsnachricht empfängt, die Informationen einschließt, die angeben, dass eine erneute Registrierung des UE (100, 900a) erforderlich ist, während eine NAS-Signalisierungs-Verbindung mit der AMF (410) beibehalten wird, und
wobei eine Registrierungsprozedur basierend auf der Konfigurationsaktualisierungsbefehlsnachricht erneut durchgeführt wird.

14. Benutzergerät, UE, (100, 900a), das in einem Drahtloskommunikationssystem arbeitet, wobei das UE (100, 900a) umfasst:
mindestens einen Transceiver (906a);
mindestens einen Prozessor (902a) und
mindestens einen Speicher (904a), der mit dem mindestens einen Prozessor (902a) wirkverbunden ist und konfiguriert ist, um Anweisungen zu speichern, die bei Ausführung den mindestens einen Prozessor (902a) dazu veranlassen, eine spezifische Operation durchzuführen,
wobei die spezifische Operation umfasst:
Registrieren (S1010, S1110) in einem 5G-System, 5GS, durch Nicht-3GPP-Zugriff;
Wechseln (S1020, S1120) in einen Ruhezustand für den Nicht-3GPP-Zugriff und
Initiieren einer Dienstanforderungsprozedur durch Übertragen (S1030, S1130) einer Dienstanforderungsnachricht, sodass das UE (100, 900a) vom Ruhezustand in einen verbundenen Zustand für den Nicht-3GPP-Zugriff wechselt,
**dadurch gekennzeichnet, dass**,
basierend darauf, dass das UE durch den Nicht-3GPP-Zugriff im 5GS registriert wird, eine Tracking-Bereichs-Kennung, TAI, für einen Registrierungsbereich, RA, eines Kontexts des UE (100, 900a) auf eine erste TAI festgelegt wird und die Dienstanforderungsprozedur basierend auf einem Tracking-Bereich, TA, an den die Dienstanforderungsnachricht übertragen wird,
durchgeführt wird.

15. Zugriffs- und Mobilitätsverwaltungsfunktion, AMF, (410), die in einem Drahtloskommunikationssystem arbeitet, wobei das Netzwerk umfasst:
mindestens einen Transceiver;
mindestens einen Prozessor und
mindestens einen Speicher, der mit dem mindestens einen Prozessor wirkverbunden ist und konfiguriert ist, um Anweisungen zu speichern, die bei Ausführung den mindestens einen Prozessor dazu veranlassen, eine spezifische Operation durchzuführen,
wobei die spezifische Operation umfasst:
Registrieren eines Benutzergeräts, UE, (100, 900a) in einem 5G-System, 5GS, durch Nicht-3GPP-Zugriff und
Durchführen einer Dienstanforderungsprozedur basierend auf einer Dienstanforderungsnachricht von dem UE (100, 900a) zum Wechseln von einem Ruhezustand in einen verbundenen Zustand; und
**dadurch gekennzeichnet, dass**,
basierend darauf, dass das UE (100, 900a) durch den Nicht-3GPP-Zugriff im 5GS registriert wird, eine Tracking-Bereichs-Kennung, TAI, für einen Registrierungsbereich, RA, eines Kontexts des UE (100, 900a) auf eine erste TAI festgelegt wird und die Dienstanforderungsprozedur basierend auf einem Tracking-Bereich, TA, an den die Dienstanforderungsnachricht übertragen wird, durchgeführt wird.

## Revendications

1. Procédé de mise à jour d'une localisation d'un équipement utilisateur, « User Equipment », UE, (100, 900a) dans un système de communication sans fil, le procédé comprenant :
l'inscription (S1010, S1110), par l'UE (100, 900a), dans un système 5G, 5GS, par le biais d'un accès non-3GPP ;
le passage (S1020, S1120), par l'UE (100, 900a), à un état inactif pour l'accès non-3GPP ; et
l'initialisation, par l'UE (100, 900a), d'une procédure de demande de service par le biais de la transmission (S1030, S1130) d'un message de demande de service pour passer de l'état inactif à un état connecté pour l'accès non-3GPP,
**caractérisé en ce que**
sur la base du fait que l'UE (100, 900a) est inscrit dans le 5GS par le biais de l'accès non-3GPP, une identification de zone de suivi, « Tracking Area Identification », TAI, pour une zone d'inscription, « Registration Area », RA, d'un contexte de l'UE (100, 900a) est réglée à une première TAI, et la procédure de demande de service inclut une procédure de mise à jour de localisation d'UE sur la base d'une zone de suivi, « Tracking Area », TA, à laquelle le message de demande de service est transmis.

2. Procédé de la revendication 1,
dans lequel, sur la base du fait que la première TAI pour la RA du contexte de l'UE (100, 900a) est modifié en une seconde TAI, une mise à jour d'inscription de l'UE (100, 900a) est réalisée au sein de la procédure de demande de service.

3. Procédé de la revendication 2,
dans lequel, sur la base du fait que la mise à jour d'inscription de l'UE (100, 900a) est réalisée, la RA du contexte de l'UE (100, 900a) est mise à jour sur la base de la seconde TAI modifiée,
dans lequel des informations d'assistance de sélection de tranche de réseau, « Network Slice Selection Assistance Information », NSSAI, permises et des NSSAI rejetées sont réglées sur la base de la RA mise à jour, et
dans lequel une opération de libération de session à unité de données par paquet, « Packet Data Unit », PDU, est réalisée sur la base des NSSAI permises et des NSSAI rejetées réglées.

4. Procédé de la revendication 3,
dans lequel l'UE (100, 900a) reçoit (S1040) un message d'acceptation de service basé sur le message de demande de service, et
dans lequel le message d'acceptation de service comprend au moins un élément parmi des informations de statut de session à PDU, des informations de RA mise à jour, les informations de NSSAI permises, ou les informations de NSSAI rejetées.

5. Procédé de la revendication 3,
dans lequel l'UE (100, 900a) reçoit un message d'instruction de mise à jour de configuration basé sur une signalisation de strate de non-accès, « Non Access Stratum », NAS, en provenance d'une fonction de gestion d'accès et de mobilité, AMF, (410), et
dans lequel le message de mise à jour de configuration comprend au moins un élément parmi les informations de RA mise à jour, les informations de NSSAI permises, ou les informations de NSSAI rejetées.

6. Procédé de la revendication 5, dans lequel l'UE (100, 900a) reçoit (S1040) un message d'acceptation de service incluant des informations de statut de session à PDU en provenance de la AMF (410) sur la base du fait qu'une session à PDU est libérée sur la base des NSSAI permises et des NSSAI rejetées.

7. Procédé de la revendication 6, dans lequel l'UE (100, 900a) reçoit (S1040) le message d'acceptation de service après avoir reçu le message de mise à jour de configuration.

8. Procédé de la revendication 7, dans lequel l'UE (100, 900a) reçoit (S1140) un message de rejet de service en provenance de la AMF (410) sur la base de la seconde TAI modifiée.

9. Procédé de la revendication 8, dans lequel le message de rejet de service comprend au moins un élément parmi des informations de cause de rejet, des informations de premier indicateur, ou des informations de second indicateur.

10. Procédé de la revendication 9, dans lequel les informations de cause de rejet comprennent une valeur de cause indiquant que l'UE (100, 900a) n'est pas localisé dans la RA de l'accès non-3GPP sur la base de la seconde TAI.

11. Procédé de la revendication 9,
dans lequel les informations de premier indicateur sont des informations indiquant que l'UE (100, 900a) n'est pas localisé dans la RA, et
dans lequel les informations de second indicateur sont des informations indiquant qu'une nouvelle inscription est nécessaire pour l'UE (100, 900a).

12. Procédé de la revendication 11, dans lequel l'UE (100, 900a) réalise une procédure d'inscription après la libération d'une connexion de signalisation NAS sur la base du second indicateur et du passage à un état inactif.

13. Procédé de la revendication 12,
dans lequel l'UE (100, 900a) reçoit un message d'instruction de mise à jour de configuration incluant des information indiquant que la réinscription de l'UE (100, 900a) est nécessaire tout en maintenant une connexion de signalisation NAS avec la AMF (410), et
dans lequel une procédure d'inscription est réalisée de nouveau sur la base du message d'instruction de mise à jour de configuration.

14. Équipement utilisateur, « User Equipment », UE, (100, 900a) fonctionnant dans un système de communication sans fil, l'UE (100, 900a) comprend :
au moins un émetteur-récepteur (906a) ;
au moins un processeur (902a) ; et
au moins une mémoire (904a) connectée opérationnellement à l'au moins un processeur (902a) et configurée pour stocker des instructions qui, lorsqu'elles sont exécutées, amènent l'au moins un processeur (902a) à réaliser une opération spécifique,
dans lequel l'opération spécifique comprend :
l'inscription (S1010, S1110) dans un système 5G, 5GS, par le biais d'un accès non-3GPP ;
le passage (S1020, S1120) à un état inactif pour l'accès non-3GPP ; et
l'initialisation d'une procédure de demande de service par le biais de la transmission (S1030, S1130) d'un message de demande de service de telle sorte que l'UE (100, 900a) passe de l'état inactif à un état connecté pour l'accès non-3GPP,
**caractérisé en ce que**
sur la base du fait que l'UE est inscrit dans le 5GS par le biais de l'accès non-3GPP, une identification de zone de suivi, « Tracking Area Identification » TAI, pour une zone d'inscription, « Registration Area » RA, d'un contexte de l'UE (100, 900a) est réglée à une première TAI, et la procédure de demande de service est réalisée sur la base d'une zone de suivi, « Tracking Area », TA, à laquelle le message de demande de service est transmis.

15. Fonction de gestion d'accès et de mobilité, « Access and Mobility Management Function », AMF, (410) fonctionnant dans un système de communication sans fil, le réseau comprend :
au moins un émetteur-récepteur ;
au moins un processeur ; et
au moins une mémoire connectée opérationnellement à l'au moins un processeur et configurée pour stocker des instructions qui, lorsqu'elles sont exécutées, amènent l'au moins un processeur à réaliser une opération spécifique,
dans lequel l'opération spécifique comprend :
l'inscription d'un équipement utilisateur, UE, (100, 900a) dans un système 5G, 5GS, par le biais d'un accès non-3GPP ; et
la réalisation d'une procédure de demande de service basée sur un message de demande de service provenant de l'UE (100, 900a) pour le passage d'un état inactif à un état connecté ; et
**caractérisé en ce que**
sur la base du fait que l'UE (100, 900a) est inscrit dans le 5GS par le biais de l'accès non-3GPP, une identification de zone de suivi, « Tracking Area Identification », TAI, pour une zone d'inscription, « Registration Area », RA d'un contexte de l'UE (100, 900a) est réglée à une première TAI, et la procédure de demande de service est réalisée sur la base d'une zone de suivi, « Tracking Area », TA, à laquelle le message de demande de service est transmis.
